# FASCICULE DE BREVET EUROPEEN

(11) **EP 2 531 157 B1**
(45) Date de publication et mention de la délivrance du brevet: **03.05.2017**
(21) Numéro de dépôt: 11707465.8
(22) Date de dépôt: 07.02.2011
(51) Int. Cl.: A61G 5/04, B62D 55/075, B62D 61/10

(54) **DISPOSITIF DE FRANCHISSEMENT D'OBSTACLE POUR FAUTEUIL ROULANT ÉLECTRIQUE**
VORRICHTUNG ZUR ERMÖGLICHUNG DER ÜBERWINDUNG VON HINDERNISSEN MIT EINEM ROLLSTUHL
DEVICE ENABLING AN ELECTRIC WHEELCHAIR TO CROSS OBSTACLES

(30) Priorité: 05.02.2010 FR 1050828
(43) Date de publication de la demande: 12.12.2012
(73) Titulaire: New Live, 67510 Climbach (FR)
(72) Inventeur: OHRUH, Michel, F-67510 Climbach (FR)
(74) Mandataire: Rhein, Alain
(86) Numéro de dépôt international: PCT/FR2011/050250
(87) Numéro de publication internationale: WO 2011/095753

(56) Documents cités:
- EP-A2- 1 522 295
- WO-A1-2008/097879
- WO-A2-2006/062905
- JP-A- 7 051 319
- US-A- 3 527 471
- US-A- 4 817 747
- US-A- 4 840 394
- US-A- 5 515 935
- US-A1- 2003 183 428
- US-A1- 2008 143 065
- US-B1- 7 475 745

## Description

La présente invention concerne un dispositif de franchissement d'obstacle pour engin motorisé.

Par engin motorisé, on entend tout engin ayant pour vocation de se déplacer de façon autonome, du type robot, fauteuil roulant, ...

A titre d'exemple qui constituera le fil conducteur de la présente description, l'engin motorisé concernera plus particulièrement un fauteuil roulant.

Ce dispositif de franchissement d'obstacle répond à des problématiques actuelles relatives au déplacement des personnes à mobilité réduite (handicapées ou âgées) ayant un usage d'un fauteuil roulant au quotidien tant en intérieur qu'en extérieur.

Dans la société actuelle, la prise en compte des personnes en situation de handicap constitue un axe prioritaire dans les projets d'urbanisme, dans l'adaptabilité des logements, dans l'accès à la voirie et aux transports publics ou privés.

Une bonne accessibilité conditionne l'insertion sociale, éducative et professionnelle. La mobilité et les déplacements constituent le gage de la qualité de vie au quotidien et à long terme.

Pour que la liberté de déplacement soit réelle, la totalité de la chaîne de déplacement doit répondre aux besoins spécifiques des personnes.

Le premier élément de cette chaîne de déplacement est incontestablement le fauteuil roulant qui constitue une aide technique à la mobilité en permettant de transporter sans peine une personne sur une surface plane.

Les projets d'urbanisme étant longs à mettre en oeuvre, de l'ordre de quelques années, le fauteuil roulant doit s'adapter à l'état actuel des villes, des voiries, des logements...

Or, les voiries présentent de nombreux trottoirs, les commerces présentent souvent un marchepied, les logements présentent parfois une différence de niveau d'une pièce à l'autre, etc. Un fauteuil roulant doit être capable de franchir ces obstacles.

De nombreuses solutions ont été proposées à cet effet. Parmi elles, des fauteuils roulants ayant une technologie six roues existent sur le marché. Elles présentent une bonne manoeuvrabilité et une bonne stabilité, mais le franchissement d'obstacles est limité à de faibles hauteurs (inférieures à 7,5cm) et ceci uniquement avec une option monte trottoir qui fait effet de levier pour soulever les roues avant.

D'autres fauteuils roulants de type 4x4 existent et permettent de rouler sur tout type de terrain (herbe, gravier, cailloux) et de franchir des obstacles jusqu'à 15cm. Le principal inconvénient de ces fauteuils réside d'une part dans leur gabarit imposant empêchant leur utilisation en intérieur et d'autre part dans leur manque de stabilité, car il existe un risque de basculement vers l'avant ou vers l'arrière lors du franchissement d'obstacle.

On connait ainsi, du document de brevet US 4 817 747, qui divulgue le préambule de la revendication indépendante 1, un véhicule tout terrain à 6 roues de forme elliptique ou ronde montées sur des bogies de chaque côté latéral du véhicule.

La présente invention remédie à ces inconvénients en proposant un fauteuil électrique compact capable de franchir des obstacles jusqu'à 20cm de hauteur et ce dans tous les angles d'attaque vers l'avant, sans risque de basculement, rendant ainsi la conduite plus aisée notamment pour les utilisateurs ayant du mal à appréhender les petits obstacles.

Un autre avantage de ce fauteuil réside dans le fait qu'il permet de circuler à la campagne dans l'herbe, le gravier, les cailloux, mais aussi dans la neige et dans le sable.

D'autres avantages ressortiront encore de la suite de la description.

A cet effet, le fauteuil est équipé d'un dispositif de franchissement d'obstacle composé :
- d'un châssis relié à trois roues de chaque côté latéral ;
- de moyens moteurs aptes à faire tourner les roues.

De chaque côté latéral du châssis se trouve un mécanisme comportant deux bras articulés sur lesquels sont réparties les trois roues, respectivement une roue avant, une roue intermédiaire, et une roue arrière. Le mécanisme à bras articulés permet à chaque roue de pivoter par rapport à l'axe de chaque roue adjacente. Le châssis est relié à chaque mécanisme à bras articulés par l'intermédiaire de deux arbres montés libre en rotation, au moins l'un des arbres étant apte à compenser la variation de distance entre ces deux arbres lorsque les bras ne sont pas alignés.En d'autres termes, ce dispositif présente la particularité suivante : la distance entre deux roues adjacentes est toujours fixe afin d'éviter tout tamponnement entre elles. Les roues peuvent se déplacer en hauteur indépendamment les unes des autres lorsqu'elles rencontrent un obstacle. Concrètement, quand le fauteuil se retrouve face à un trottoir, les deux roues avant vont le franchir en premier, tandis que les autres roues resteront en contact avec le sol. Puis, les deux roues suivantes arriveront face au trottoir et le franchiront, les autres roues restant en contact avec le sol, et ainsi de suite. Finalement, les deux roues arrière franchiront le trottoir, les roues de devant restant posées au sol. A tout moment, le fauteuil a plus de trois points d'appui de manière à définir un plan qui confère une stabilité au fauteuil.

Selon l'invention, les bras sont articulés deux à deux autour d'un axe commun correspondant à un axe de rotation d'une roue intermédiaire.

Les moyens moteurs situés sous le siège du fauteuil sont reliés à l'un des bras articulés du mécanisme par un axe moteur. Cet axe moteur entraîne en rotation les roues par l'intermédiaire de moyens de transmission disposés entre l'axe moteur et les axes des roues.

De préférence, les moyens moteurs consistent en au moins deux moteurs placés sous le fauteuil de part et d'autre d'un plan médian transversal d'allure verticale. L'un des moteurs alimente les roues latérales gauches, et l'autre moteur alimente les roues latérales droites. Comme précisé ci-dessus, chaque moteur est relié de son côté à l'un des bras articulés du mécanisme par un axe moteur.

Selon une autre possibilité, les moyens moteurs pourraient être montés directement sur l'axe d'une roue, ou encore intégrés directement dans les roues.

Le fait que les roues latérales gauches soient alimentées indépendamment des roues latérales droites permet au fauteuil de tourner à 360° sur lui-même. Cette faculté confère un avantage conséquent à l'utilisateur du fauteuil, puisque le déplacement en est grandement facilité. Par exemple, il n'est plus nécessaire d'avoir une distance de recul ou un angle de braquage suffisant pour faire demi-tour. De manière générale, lors d'une rotation, l'encombrement du fauteuil se limite à ses dimensions extérieures. Ce fauteuil est ainsi plus facile d'utilisation, notamment pour les utilisateurs souffrant de troubles cognitifs, et ayant une commande manuelle électrique à portée de main.

Comme déjà évoqué, le châssis du fauteuil est relié à chaque mécanisme à bras articulés par l'intermédiaire de deux arbres, l'un des arbres étant apte à compenser la variation de distance entre ces deux arbres lorsque les bras ne sont pas alignés dans un plan horizontal. En effet, lors du franchissement d'un obstacle, les roues ne sont pas alignées, et les bras articulés pivotent en conséquence et forment un angle aboutissant à rapprocher les deux arbres. Or, le châssis a des dimensions fixes et est relié à ces deux arbres. Pour éviter toute déformation, voire rupture, du châssis il est donc indispensable de pouvoir compenser la modification de l'entraxe des arbres de fixation des bras articulés par rapport à l'entraxe de fixation de ces mêmes arbres au châssis, lors du franchissement d'obstacle.

Selon une première variante, cette condition peut être remplie par un arbre de type vilebrequin composé de deux tronçons cylindriques décalés l'un par rapport à l'autre. Ce décalage rattrape la variation de distance entre les deux arbres quand les roues ne sont pas alignées.

Selon une seconde variante, l'arbre de type vilebrequin peut être composé d'un premier tronçon d'arbre relié à un bras articulé et d'un second tronçon d'arbre relié au châssis, les deux tronçons d'arbres étant articulés entre eux par une bielle.

Selon une troisième variante, cette condition peut être remplie par un arbre coulissant dans un plan horizontal entre deux butées définissant la distance maximale et minimale autorisée entre les deux arbres. Cet arbre coulissant permet de faire varier la distance entre les deux arbres au niveau des bras articulés ou au niveau du châssis. Par exemple, cet arbre coulissant pourra s'introduire soit dans une fente horizontale prévue à cet effet dans un bras articulé, soit dans une fente horizontale prévue à cet effet sur le châssis.

Comme précisé ci-dessus, l'un des principaux avantages de la présente invention est sa stabilité. Celle-ci est accrue par un dispositif anti basculement avant et/ou arrière.

En effet, lors d'un déplacement vers le bas d'une pente, le fauteuil aura tendance à pencher vers l'avant, délestant ainsi l'arrière. Il est alors judicieux d'empêcher la roue arrière de se soulever seule par rapport aux roues placées devant elle. Sans ce dispositif anti basculement, le châssis basculerait vers l'avant tout en soulevant la roue arrière, provoquant une situation dangereuse pour l'utilisateur. La situation est identique lors de la montée d'une pente, où il existe un risque de soulèvement de la roue avant.

A cet effet, le dispositif anti basculement avant et/ou arrière selon l'invention comprend, de chaque côté latéral de l'engin, des moyens de blocage du pivotement d'au moins un bras articulé lors du basculement du châssis vers l'avant ou vers l'arrière.

Plus précisément, lesdits moyens de blocage du pivotement des bras articulés lors du basculement du châssis vers l'avant ou vers l'arrière consistent en un cliquet de blocage du pivotement des bras respectivement arrière et avant auxquels il est relié au moyen d'une double tringlerie transformant la variation de distance entre le châssis et les bras articulés en un déplacement du cliquet de sorte qu'une de ses extrémités coopère avec une bordure crantée desdits moyens de blocage et bloque ledit pivotement.

En pratique, les deux tringleries consistent chacune en une genouillère dont les biellettes distales du cliquet sont entrainées respectivement par le bras avant ou arrière et dont les biellettes proximales du cliquet sont articulées aux deux extrémités d'une biellette comportant un tourillon autour duquel pivote le cliquet dont une extrémité est articulée au châssis, l'une des biellettes de chaque genouillère étant également articulée au châssis.

En sus de l'anti basculement, le dispositif de franchissement d'obstacle est amélioré au moyen d'un dispositif d'aide au franchissement de l'arrière de l'engin. Ce dispositif d'aide supplémentaire comporte de chaque côté latéral de l'engin une roulette anti bascule placée à l'arrière de l'engin, fixée à une extrémité d'une tige articulée au châssis et à une biellette le reliant à des moyens d'amortissement. Cette biellette est reliée par pivotement à une genouillère dont la biellette distale des moyens d'amortissement est articulée d'une part au châssis au droit de l'axe central du bras arrière et d'autre part audit bras arrière au niveau de son axe central.

Concrètement, ce dispositif d'aide au franchissement répercute le pivotement des bras articulés sur la position de la roulette, cette dernière étant maintenue en position surélevée par rapport au sol lors du roulage sur un sol plat et plaquée au sol lors du franchissement d'un obstacle de la roue arrière.

De façon avantageuse, les moyens d'amortissement consistent en une bielle de longueur variable, de type vérin ou amortisseur à ressort axial, montée au châssis de manière pivotante, apte à se compresser élastiquement lors du placage de la roulette au sol. Ces moyens d'amortissement ont pour objectif d'absorber une partie de la charge supportée par la roue arrière lorsqu'elle franchit un obstacle. Le vérin /amortisseur est détendu lors du roulage sur le plat, et compressé lors du franchissement d'un obstacle.

Selon l'invention, un fauteuil roulant équipé du dispositif de franchissement d'obstacle ne dépasse pas les dimensions d'un fauteuil électrique standard à dominance intérieure, donc adapté aux passages de portes, au transport...

Selon une configuration possible, au moins un train de roues peut être équipé de lamelles hautes flexibles dans la direction de l'axe de pivotement des roues, de préférence l'avant-train ou l'arrière-train. Cette configuration permet d'éviter une usure prématurée des pneus entraînée notamment par la rotation du fauteuil sur lui-même qui fait riper les pneus. Ce type de roue présente un avantage supplémentaire puisque les lamelles hautes peuvent agir comme une semelle crantée pour un roulage plus aisé dans la neige ou le sable.

Selon une autre configuration possible, au moins un train de roues peut être équipé de roues omnidirectionnelles, de préférence l'avant-train ou l'arrière-train. Cette configuration permet d'éviter toute usure prématurée des pneus lors de la rotation du fauteuil sur lui-même, qu'elle facilite par ailleurs.

En vue d'assouplir et de faciliter encore le franchissement d'obstacle, des roues additionnelles avec par exemple des pneus à reliefs de type crampons peuvent être ajoutées entre deux roues adjacentes, en retrait latéralement par rapport aux roues déjà existantes. Ces roues additionnelles permettent entre-autres au fauteuil de monter des escaliers.

Pour minimiser les contraintes pouvant s'exercer sur les surfaces d'adhérence des roues sur un sol irrégulier ou lors du passage d'obstacles, au moins une roue peut être montée sur un moyeu souple en rotation, c'est-à-dire avec un jeu élastique au niveau de son axe de rotation, et/ou sur un moyeu à roue libre, c'est-à-dire que la roue est entrainée seulement dans un sens.

Une autre option serait d'équiper ce fauteuil roulant d'un siège basculant muni d'un capteur de niveau, de manière à ce que le siège reste toujours positionné à l'horizontale quel que soit l'endroit où se trouve le fauteuil. Ce siège basculant améliore considérablement le confort du passager.

Selon un dernier avantage, ce fauteuil roulant, équipé du dispositif de franchissement d'obstacle, peut être démontable.

L'invention va à présent être décrite plus en détail, selon des configurations possibles, en référence aux figures annexées pour lesquelles :
- la figure 1 est une vue de côté très schématique montrant le fauteuil roulant à plat ;
- la figure 2 montre une vue partielle du fauteuil en coupe A-A ;
- la figure 3 représente un agrandissement du mécanisme à bras articulés, côté châssis, sans carter de protection ;
- la figure 4 représente un agrandissement du mécanisme à bras articulés, côté châssis, avec un carter de protection ;
- la figure 5 est une vue en perspective du mécanisme à bras articulés équipé de roues et faisant apparaître deux arbres reliés au châssis ;
- la figure 6 représente une configuration possible des moyens de transmission ;
- la figure 7a montre schématiquement le fauteuil roulant équipé du dispositif anti basculement ;
- les figures 7b à 7e représentent un risque de basculement avant et arrière ;
- les figures 8a et 8b illustrent le fauteuil doté d'un dispositif d'aide au franchissement d'un obstacle.

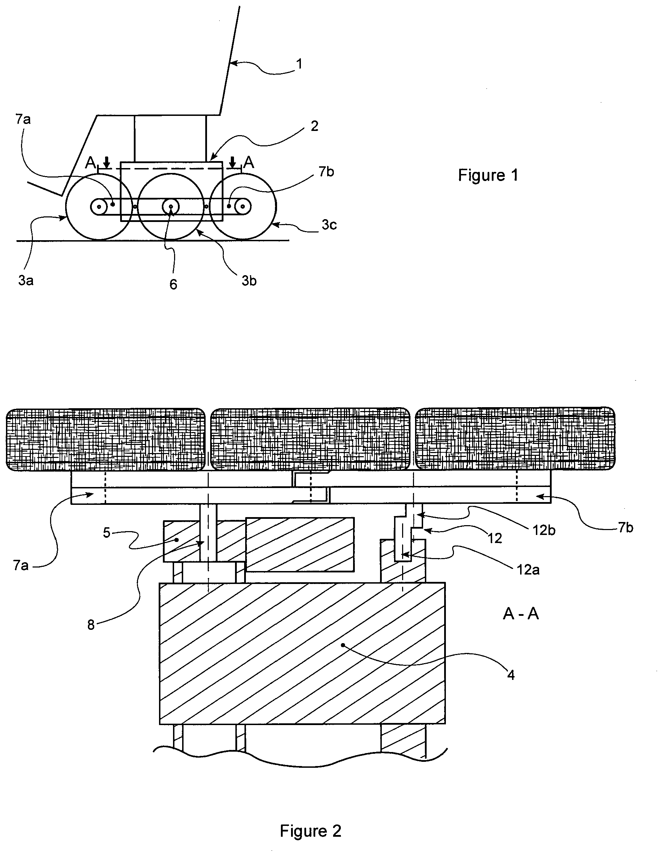

En référence à la figure 1, le dispositif de franchissement d'obstacle de l'invention se compose d'un châssis (2) sur lequel est fixé un fauteuil (1), de trois roues (3a, 3b, 3c) en ligne de chaque côté latéral du châssis (2), et d'un mécanisme comportant deux bras articulés (7a, 7b) dans lesquels sont réparties les trois roues en ligne (3a, 3b, 3c).

La roue avant (3a) est positionnée à l'avant du premier bras articulé (7a), la roue intermédiaire (3b) est positionnée au niveau de l'articulation entre les deux bras (7a, 7b) et la roue arrière (3c) est positionnée à l'arrière du second bras articulé (7b). Les deux bras (7a, 7b) sont ainsi articulés autour d'un axe commun correspondant à l'axe (6) de la roue intermédiaire (3b).

L'articulation entre les deux bras (7a, 7b) correspond donc à une liaison pivot. Celle-ci permet aux roues avant (3a) et arrière (3c) de pivoter autour de l'axe (6) de la roue intermédiaire (3b). Les trois roues (3a, 3b, 3c) peuvent ainsi monter et descendre indépendamment les unes des autres lors du franchissement d'un obstacle.

La figure 2 dévoile une partie du système électrique situé sous l'assise du fauteuil (1). On y trouve un bloc batterie (4) relié de chaque côté latéral à l'avant du mécanisme à bras articulés (7a, 7b) par l'intermédiaire d'un moteur (5) et d'un axe moteur (8), et à l'arrière du mécanisme par un axe de type vilebrequin (12) monté fou. Le bloc batterie (4) est lui-même fixé au châssis (2) du fauteuil. L'axe du vilebrequin (12) se décompose en deux arbres (12a, 12b) ayant leurs axes de rotation légèrement décalés l'un par rapport à l'autre, le premier arbre (12a) étant solidaire du bloc batterie (4) tandis que le second arbre (12b) est solidaire d'un bras articulé (7b).

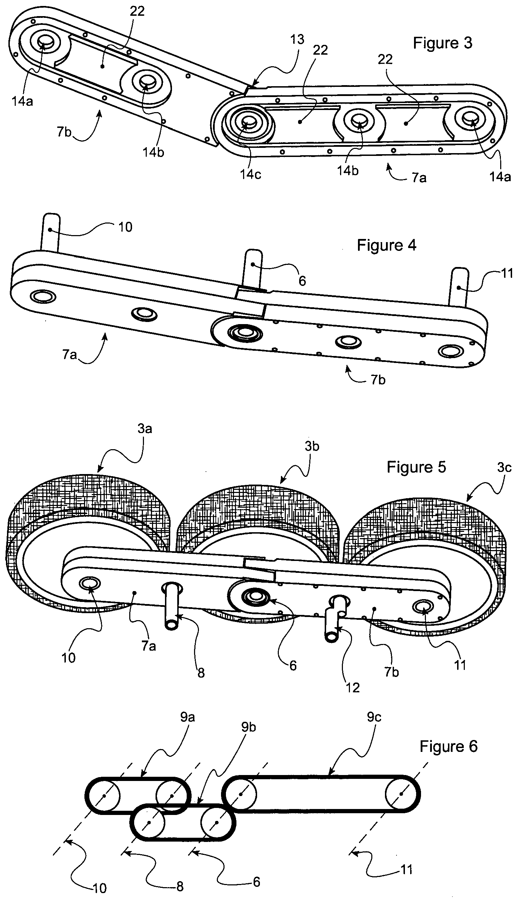

Comme représenté sur la figure 6, l'axe moteur (8) entraîne en rotation les trois roues en ligne (3a, 3b, 3c) par l'intermédiaire de trois chaînes ou courroies de transmission (9a, 9b, 9c) disposées respectivement entre l'axe moteur (8) et l'axe de la roue avant (10), entre l'axe moteur (8) et l'axe de la roue intermédiaire (6), et entre l'axe de la roue intermédiaire (6) et l'axe de la roue arrière (11). Les moyens moteurs transmettent un mouvement de rotation aux roues (3a, 3b, 3c) de manière indépendante entre les roues latérales gauches et les roues latérales droites. Grâce à une commande manuelle électrique, l'utilisateur pourra par exemple décider de faire tourner les roues gauches dans le sens inverse des roues droites pour commander une rotation du fauteuil sur lui-même. Il pourra également négocier un virage long en commandant le moteur de manière à faire tourner les roues droites (respectivement gauches) plus vite que les roues gauches (respectivement droites).

Les figures 3 à 5 permettent d'observer une configuration possible de mécanisme à bras articulés (7a, 7b) plus en détail.

Ce mécanisme se compose de deux bras articulés (7a, 7b) par une liaison pivot. Chaque bras articulé (7a, 7b) correspond à une pièce usinée de forme oblongue ayant une portion (13) où l'épaisseur est réduite au niveau de l'articulation centrale et comprenant trois orifices (14a, 14b, 14c) répartis au centre et à chaque extrémité. Ces orifices sont aptes à accueillir des roulements dans lesquels est inséré soit l'axe moteur (8), soit l'axe de type vilebrequin (12), soit un axe de roue (10 ou 6 ou 11). Les bras articulés (7a, 7b) se chevauchent au niveau de la portion (13) de manière à former un mécanisme d'épaisseur régulière avec un bras avant (7a) et un bras arrière (7b). Sans dépasser cette épaisseur, des protubérances (22) sont prévues sur la face des bras côté roues pour guider le passage des chaînes de transmission (9a, 9b, 9c).

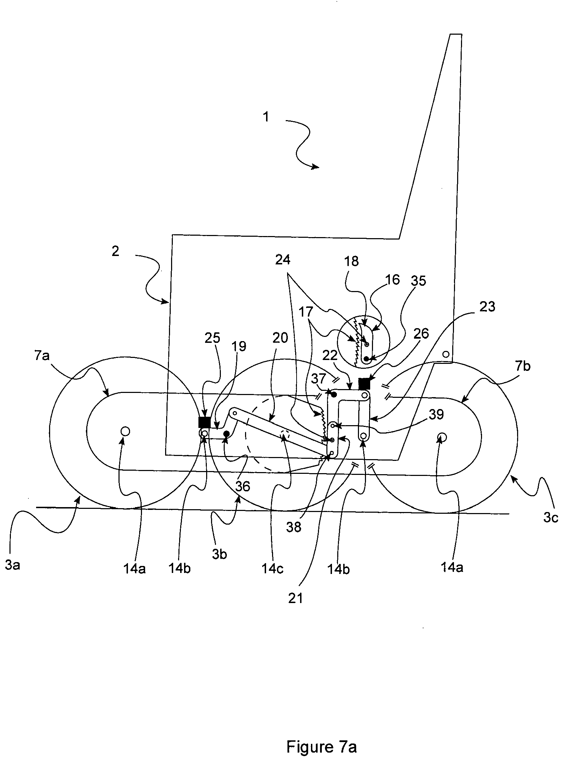

La figure 7a présente le dispositif anti basculement. Il est installé de chaque côté latéral du fauteuil (1).

Ce dispositif comporte un cliquet (16) de blocage du pivotement des bras avant (7a) et arrière (7b) auxquels il est relié au moyen d'une double tringlerie. Ce cliquet (16) coopère avec une bordure crantée (17) se trouvant à l'arrière du bras avant (7a). Le cliquet (16) consiste en une biellette d'allure rectiligne articulée au châssis (2) par l'arbre (35) et se terminant par une pointe (18) dirigée vers la bordure crantée (17), la forme de la pointe (18) étant prévue pour s'insérer dans l'un des crans.

Chaque tringlerie consiste en une genouillère composée d'une biellette en forme d'équerre (19, 22) articulée au châssis (2) au niveau des
arbres (36, 37) et d'une biellette rectiligne (20, 23). Les biellettes distales (19, 23) du cliquet (16) sont articulées par rapport à l'axe central (14b), respectivement, du bras avant (7a) et du bras arrière (7b). Les biellettes proximales (20, 22) du cliquet (16) sont quant à elles articulées aux deux extrémités (38, 39) d'une bielle (21) rectiligne comportant un tourillon (24) autour duquel pivote le cliquet (16).

Des butées (25, 26) appartenant au châssis (2) limitent le déplacement des bielles distales (19, 23) vers le haut.

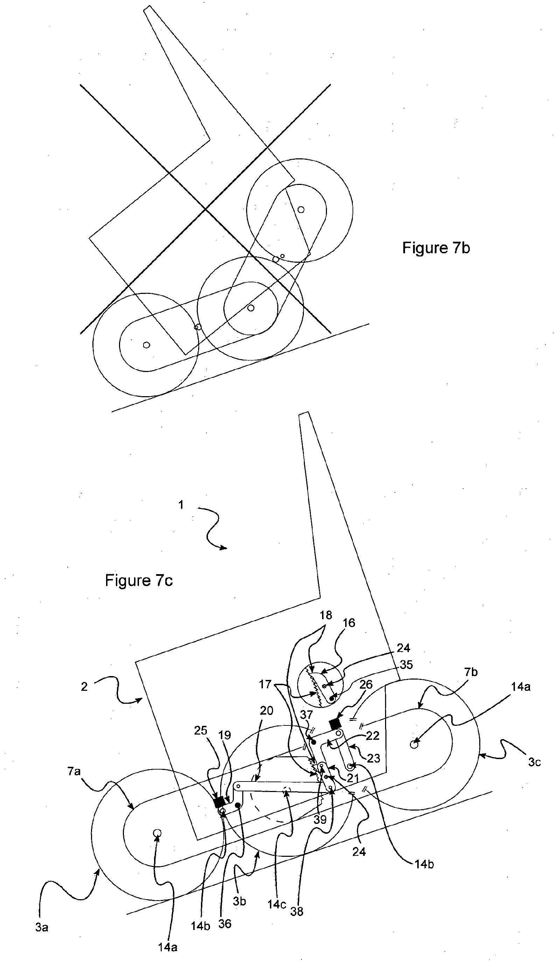

Comme illustré en figure 7c, lorsque le fauteuil (1) penche vers l'avant, l'arrière du châssis (2) se soulève, et la butée (26) s'éloigne de la biellette (23) et à fortiori du bras arrière (7b). Cette variation de distance entre le châssis (2) et le bras arrière (7b) entraine le basculement des genouillères qui font pivoter la bielle (21) puis le cliquet (16) permettant à la pointe (18) de s'insérer dans un cran bloquant tout pivotement du bras articulé (7b) par rapport à son axe (14b) de maintien au châssis (2).

En effet, lorsque l'arrière du châssis (2) se soulève, il a tendance à tirer sur le bras arrière (7b) et la roue arrière (3c) vers le haut. Or ceux-ci, de part leur poids, ont tendance à exercer une force en direction du sol.

Si la roue arrière (3c) vient à décoller légèrement du sol, alors la tringlerie bloque le pivotement des bras articulés (7a, 7b) au niveau de l'axe (14c) de la roue centrale (3c) empêchant tout déplacement supplémentaire de la roue arrière (3c) et tout risque de basculement du fauteuil (1).

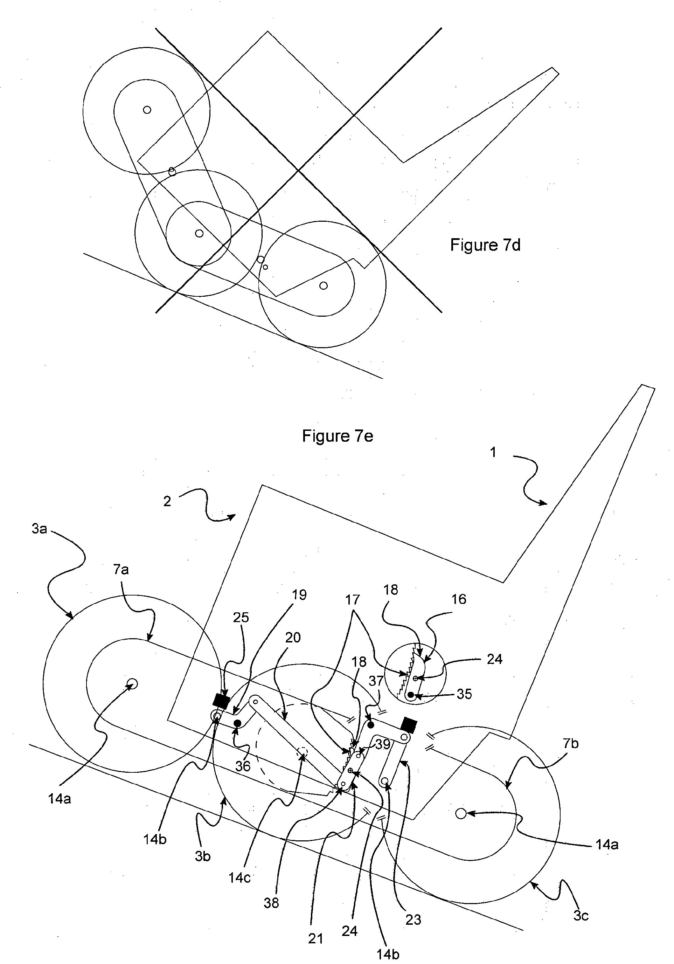

Le fonctionnement est identique lorsque le fauteuil (1) penche vers l'arrière et a tendance à vouloir soulever la roue avant (3a), comme illustré en figure 7e.

Les figures 7b et 7d représentent le fauteuil sans dispositif anti basculement. Dans ce cas, la roue arrière ou la roue avant se soulève complètement et provoque le basculement du fauteuil.

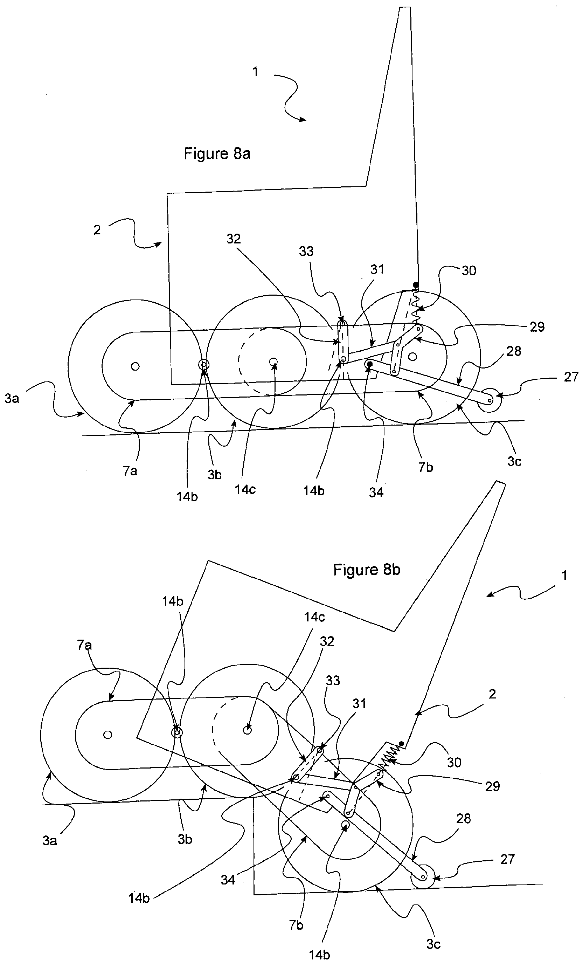

Les figures 8a et 8b illustrent un fauteuil roulant équipé d'un dispositif d'aide au franchissement d'un obstacle.

Sur la figure 8a, le dispositif est en position initiale, lors du roulage du fauteuil sur le plat. Sur la figure 8b, le dispositif d'aide est sollicité, la roue arrière du fauteuil étant en train de franchir un obstacle.

Ce dispositif d'aide au franchissement est installé de chaque côté latéral du fauteuil (1).

Concrètement, il comporte une roulette anti bascule (27) placée à l'arrière du fauteuil (1) et fixée à une première extrémité d'une tige (28), sa seconde extrémité (34) étant articulée au châssis (2). Une biellette coudée (29) relie cette tige (28) par pivotement à la fois à un amortisseur (30) à ressort axial articulé au châssis (2), et à une genouillère faisant le lien avec le bras arrière (7b) tout en étant articulée au châssis (2) au niveau de son extrémité (33) distale de la biellette coudée (29). Plus précisément, la genouillère est composée de deux biellettes rectilignes (31, 32) articulées entre-elles au niveau de l'axe central (14b) du bras arrière (7b).

Lorsque le fauteuil roule sur un terrain plat, comme illustré en figure 8, la roulette anti bascule est maintenue en position surélevée par rapport au sol, l'amortisseur (30) étant décompressé.

En franchissant un obstacle, le fauteuil (1) bascule forcément vers l'arrière et la roulette (27) vient alors toucher le sol. Parallèlement, les bras (7a, 7b) ne sont plus alignés mais forment un angle, et la position de l'axe central (14b) du bras arrière (7b) par rapport au châssis (2) change. Cette variation de position se traduit par un pivotement de la biellette (32) autour de l'extrémité (33). Ce pivotement de la genouillère entraine le rapprochement de la biellette coudée (29) vers le châssis (2), cette réduction de distance étant compensée par la compression de l'amortisseur (30) transférant sur la roulette (27), plaquée au sol, une partie du poids exercé sur la roue arrière (3c) et facilitant ainsi le franchissement de l'obstacle.

## Revendications

1. Dispositif de franchissement d'obstacle pour engin motorisé constitué :
- d'un châssis (2) relié à trois roues (3a, 3b, 3c) de chaque côté latéral ;
- de moyens moteurs (5) aptes à faire tourner les roues (3a, 3b, 3c);
et, de chaque côté latéral du châssis (2), se trouve un mécanisme comportant deux bras (7a, 7b), articulés deux à deux autour d'un axe de pivotement commun (6), sur lesquels sont réparties les trois roues, respectivement une roue avant (3a), une roue intermédiaire (3b), et une roue arrière (3c), ledit mécanisme permettant à chaque roue de pivoter par rapport à l'axe de chaque roue adjacente, **caractérisé en ce que** le châssis (2) est relié à chaque mécanisme à bras articulés (7a, 7b) par l'intermédiaire de deux arbres (8, 12) montés libre en rotation, au moins l'un des arbres (12) étant apte à compenser la variation de distance entre ces deux arbres (8,12) lorsque les bras (7a, 7b) ne sont pas alignés.

2. Dispositif de franchissement d'obstacle selon la revendication précédente, **caractérisé en ce que** les moyens moteurs (5) sont reliés à l'un des bras articulés (7a, 7b) du mécanisme par un axe moteur (8).

3. Dispositif de franchissement d'obstacle selon la revendication précédente, **caractérisé en ce que** ledit axe moteur (8) entraîne en rotation les roues (3a, 3b, 3c) par l'intermédiaire de moyens de transmission (9a, 9b, 9c) disposés entre l'axe moteur (8) et les axes des roues.

4. Dispositif de franchissement d'obstacle selon la revendication précédente, **caractérisé en ce que** les roues latérales gauches sont alimentées par des moyens moteurs indépendants des moyens moteurs alimentant les roues latérales droites.

5. Dispositif de franchissement d'obstacle selon la revendication précédente, **caractérisé en ce que** l'un desdits arbres est un arbre de type vilebrequin (12).

6. Dispositif de franchissement d'obstacle selon la revendication précédente, **caractérisé en ce que** l'arbre de type vilebrequin (12) est composé d'un premier tronçon d'arbre (12b) relié à un bras articulé (7b) et d'un second tronçon d'arbre (12a) relié au châssis (2), les deux tronçons d'arbres (12a, 12b) étant articulés entre eux par une bielle.

7. Dispositif de franchissement d'obstacle selon la revendication 1, **caractérisé en ce que** l'un desdits arbres est un arbre coulissant dans un plan horizontal.

8. Dispositif de franchissement d'obstacle selon l'une des revendications précédentes, **caractérisé en ce qu'**il est doté d'un dispositif anti basculement avant et/ou arrière comprenant de chaque côté latéral de l'engin des moyens de blocage du pivotement d'au moins un bras articulé (7a, 7b) lors du basculement du châssis (2) vers l'avant ou vers l'arrière.

9. Dispositif de franchissement d'obstacle selon la revendication précédente, **caractérisé en ce que** lesdits moyens de blocage du pivotement des bras articulés (7a, 7b) lors du basculement du châssis (2) vers l'avant ou vers l'arrière consistent en un cliquet (16) de blocage du pivotement des bras respectivement arrière (7b) et avant (7a) auxquels il est relié au moyen d'une double tringlerie transformant la variation de distance entre le châssis (2) et les bras articulés (7a, 7b) en un déplacement du cliquet (16) de sorte qu'une de ses extrémités coopère avec une bordure crantée (17) desdits moyens de blocage et bloque ledit pivotement.

10. Dispositif de franchissement d'obstacle selon la revendication précédente, **caractérisé en ce que** les deux tringleries consistent chacune en une genouillère dont les biellettes distales (19, 23) du cliquet (16) sont entrainées respectivement par le bras avant (7a) ou arrière (7b) et dont les biellettes proximales (20, 22) du cliquet (16) sont articulées aux deux extrémités (38, 39) d'une biellette (21) comportant un tourillon (24) autour duquel pivote le cliquet (16) dont une extrémité est articulée au châssis (2), l'une des biellettes (19, 22) de chaque genouillère étant également articulée au châssis (2).

11. Dispositif de franchissement d'obstacle selon l'une des revendications précédentes, **caractérisé en ce qu'**il est doté d'un dispositif d'aide au franchissement de l'arrière de l'engin, comportant de chaque côté latéral de l'engin une roulette anti bascule (27) placée à l'arrière de l'engin, fixée à une extrémité d'une tige (28) articulée au châssis (2) et à une biellette (29) le reliant à des moyens d'amortissement, ladite biellette (29) étant reliée par pivotement à une genouillère dont la biellette distale des moyens d'amortissement est articulée d'une part au châssis (2) au droit de l'axe central (14b) du bras arrière (7b) et d'autre part audit bras arrière (7b) au niveau de son axe central (14b), ce dispositif d'aide au franchissement répercutant le pivotement des bras articulés (7a, 7b) sur la position de la roulette (27), cette dernière étant maintenue en position surélevée par rapport au sol lors du roulage sur un sol plat et plaquée au sol lors du franchissement d'un obstacle de la roue arrière (3c).

12. Dispositif de franchissement d'obstacle selon la revendication précédente, **caractérisé en ce que** les moyens d'amortissement consistent en une bielle de longueur variable, de type vérin ou amortisseur à ressort axial (30), montée au châssis (2) de manière pivotante, apte à se compresser élastiquement lors du placage de la roulette (27) au sol.

13. Dispositif de franchissement d'obstacle selon l'une des revendications précédentes, **caractérisé en ce qu'**au moins un train de roues est équipé de lamelles hautes flexibles dans la direction de l'axe de pivotement des roues.

14. Dispositif de franchissement d'obstacle selon l'une des revendications précédentes, **caractérisé en ce qu'**au moins un train de roues est équipé de roues omnidirectionnelles.

15. Dispositif de franchissement d'obstacle selon l'une des revendications précédentes, **caractérisé en ce que** des roues additionnelles sont ajoutées entre deux roues adjacentes, en retrait latéralement par rapport aux roues déjà existantes.

16. Dispositif de franchissement d'obstacle selon l'une des revendications précédentes, **caractérisé en ce qu'**au moins une roue est montée sur un moyeu souple en rotation et/ou sur un moyeu à roue libre.

17. Engin motorisé équipé d'un dispositif de franchissement d'obstacle selon la revendication 1, **caractérisé en ce qu'**il comprend un siège d'utilisateur basculant et se positionnant à l'horizontale dans toute circonstance au moyen d'un capteur de niveau.

## Patentansprüche

1. Vorrichtung zur Ermöglichung der Überwindung eines Hindernisses für ein motorisiertes Fahrzeug bestehend aus:
- einem Fahrgestell (2), das an jeder seitlichen Seite mit drei Rädern (3a, 3b, 3c) verbunden ist;
- Antriebsmittel (5), die in der Lage sind, die Räder (3a, 3b, 3c) zu drehen;
und, an jeder seitlichen Seite des Fahrgestells (2) befindet sich ein Mechanismus, der zwei paarweise um eine gemeinsame Schwenkachse (6) gelenkige Arme (7a, 7b) umfasst, auf denen die drei Räder, ein Vorderrad (3a), ein Zwischenrad (3b) bzw. ein Hinterrad (3c), verteilt sind, wobei der besagte Mechanismus jedem Rad erlaubt, um die Achse jedes benachbarten Rades zu schwenken, **dadurch gekennzeichnet, dass** das Fahrgestell (2) über zwei Wellen (8, 12) mit jedem Mechanismus mit gelenkigen Armen (7a, 7b) verbunden ist, die frei drehbar gelagert sind, wobei zumindest eine der Wellen (12) in der Lage ist, die Abstandsänderung zwischen diesen zwei Wellen (8, 12) zu kompensieren, wenn die Arme (7a, 7b) nicht ausgerichtet sind.

2. Vorrichtung zur Ermöglichung der Überwindung eines Hindernisses nach dem vorhergehenden Anspruch, **dadurch gekennzeichnet, dass** die Antriebsmittel (5) über eine Antriebswelle (8) mit einem der gelenkigen Arme (7a, 7b) des Mechanismus verbunden sind.

3. Vorrichtung zur Ermöglichung der Überwindung eines Hindernisses nach dem vorhergehenden Anspruch, **dadurch gekennzeichnet, dass** die besagte Antriebswelle (8) die Räder (3a, 3b, 3c) über zwischen der Antriebswelle (8) und den Achsen der Räder angeordnete Transmissionsmittel (9a, 9b, 9c) in Drehung antreibt.

4. Vorrichtung zur Ermöglichung der Überwindung eines Hindernisses nach dem vorhergehenden Anspruch, **dadurch gekennzeichnet, dass** die linken seitlichen Räder durch Antriebsmittel angetrieben werden, die von den Antriebsmitteln, die die rechten seitlichen Räder antreiben, unabhängig sind.

5. Vorrichtung zur Ermöglichung der Überwindung eines Hindernisses nach dem vorhergehenden Anspruch, **dadurch gekennzeichnet, dass** eine der besagten Wellen eine Welle der Art Kurbelwelle (12) ist.

6. Vorrichtung zur Ermöglichung der Überwindung eines Hindernisses nach dem vorhergehenden Anspruch, **dadurch gekennzeichnet, dass** die Welle der Art Kurbelwelle (12) aus einem ersten Wellenabschnitt (12b), der mit einem gelenkigen Arm (7b) verbunden ist, und einem zweiten Wellenabschnitt (12a), der mit dem Fahrgestell (2) verbunden ist, besteht, wobei die zwei Wellenabschnitte (12a, 12b) über eine Verbindungsstange zu einander gelenkig sind.

7. Vorrichtung zur Ermöglichung der Überwindung eines Hindernisses nach Anspruch 1, **dadurch gekennzeichnet, dass** eine der besagten Wellen eine in einer horizontalen Ebene gleitende Welle ist.

8. Vorrichtung zur Ermöglichung der Überwindung eines Hindernisses nach einem der vorhergehenden Ansprüche, **dadurch gekennzeichnet, dass** sie mit einer vorderen und/oder hinteren Anti-Kipp-Vorrichtung versehen ist, die an jeder seitlichen Seite des Fahrzeuges Mittel zum Sperren der Schwenkung von mindestens einem gelenkigen Arm (7a, 7b) beim Kippen des Fahrgestells (2) nach vorne oder nach hinten umfasst.

9. Vorrichtung zur Ermöglichung der Überwindung eines Hindernisses nach dem vorhergehenden Anspruch, **dadurch gekennzeichnet, dass** die Mittel zum Sperren der Schwenkung der gelenkigen Arme (7a, 7b) während dem Kippen des Fahrgestells (2) nach vorne oder nach hinten aus einer Sperrklinke (16) zum Sperren der Schwenkung des hinteren (7b) bzw. des vorderen Armes (7b) bestehen, mit denen sie mittels eines doppelten Gestänges verbunden ist, das die Abstandänderung zwischen dem Fahrgestell (2) und den gelenkigen Armen (7a, 7b) in eine Verschiebung der Sperrklinke (16) umwandelt, so dass eines ihrer Ende mit einem geriffelten Rand (17) der besagten Sperrmittel zusammenwirkt und die besagte Kippung sperrt.

10. Vorrichtung zur Ermöglichung der Überwindung eines Hindernisses nach dem vorhergehenden Anspruch, **dadurch gekennzeichnet, dass** die zwei Gestänge jeweils aus einem Kniehebel, dessen distale Verbindungsstangen (19, 23) der Sperrklinke (16) von dem vorderen (7a) bzw. dem hinteren Arm (7b) angetrieben werden und dessen proximale Verbindungsstangen (20, 22) der Sperrklinke (16) an den beiden Enden (38, 39) einer Verbindungsstange (21) angelenkt sind, der einen Drehzapfen (24) umfasst, um den die Sperrklinke (16) schwenkt, dessen eines Ende an dem Fahrgestell (2) angelenkt ist, wobei eine der Verbindungsstangen (19, 22) jedes Kniehebels auch am Fahrgestell (2) angelenkt ist.

11. Vorrichtung zur Ermöglichung der Überwindung eines Hindernisses nach einem der vorhergehenden Ansprüche, **dadurch gekennzeichnet, dass** sie mit einer Vorrichtung zum Helfen bei der Überwindung der Rückseite des Fahrzeugs versehen ist, die an jeder seitlichen Seite des Fahrzeugs ein Anti-Kipp-Rädchen (27) umfasst, das an der Rückseite des Fahrzeugs angeordnet ist, an einem Ende einer Stange (28), die an dem Fahrgestell (2) angelenkt ist, und an eine Verbindungstange (29) befestigt ist, die sie mit Dämpfungsmitteln verbindet, wobei die besagte Verbindungsstange (29) durch Schwenkung mit einem Kniehebel verbunden ist, dessen distale Verbindungsstange der Dämpfungsmittel einerseits an dem Fahrgestell (2) gegenüber der Mittelachse (14b) des hinteren Arms (7b) und andererseits an dem besagten hinteren Arm (7b) im Bereich seiner Mittelachse (14b) angelenkt ist, wobei diese Vorrichtung zum Helfen bei der Überwindung die Schwenkung der gelenkigen Arme (7a, 7b) auf der Position des Rädchens (27) überträgt, wobei letzteres beim Fahren auf einem ebenen Boden in einer erhöhten Position relativ zum Boden gehalten wird und beim Überwinden eines Hindernisses durch das hintere Rad (3c) auf den Boden gedrückt wird.

12. Vorrichtung zur Ermöglichung der Überwindung eines Hindernisses nach dem vorhergehenden Anspruch, **dadurch gekennzeichnet, dass** die Dämpfungsmittel aus einem Stab variierbarer Länge, der Art Zylinder oder Dämpfer mit Axialfeder (30), bestehen, die schwenkbar auf dem Fahrgestell (2) gelagert und fähig ist, sich beim Drücken des Rädchens (27) auf den Boden elastisch zusammenzudrücken.

13. Vorrichtung zur Ermöglichung der Überwindung eines Hindernisses nach einem der vorhergehenden Ansprüche, **dadurch gekennzeichnet, dass** wenigstens ein Satz von Rädern mit flexiblen hohen Lamellen in Richtung auf die Schwenkachse der Räder ausgestattet ist.

14. Vorrichtung zur Ermöglichung der Überwindung eines Hindernisses nach einem der vorhergehenden Ansprüche, **dadurch gekennzeichnet, dass** wenigstens ein Satz von Rädern mit omnidirektionalen Rädern ausgestattet ist.

15. Vorrichtung zur Ermöglichung der Überwindung eines Hindernisses nach einem der vorhergehenden Ansprüche, **dadurch gekennzeichnet, dass** zusätzliche Räder zwischen zwei benachbarten Rädern, seitlich relativ zu den bereits vorhandenen Rädern zurückgezogen, hinzugefügt sind.

16. Vorrichtung zur Ermöglichung der Überwindung eines Hindernisses nach einem der vorhergehenden Ansprüche, **dadurch gekennzeichnet, dass** zumindest ein Rad auf einer flexiblen Nabe und/oder auf einer Freilaufnabe drehbar gelagert ist.

17. Motorisiertes Fahrzeug ausgestattet mit einer Vorrichtung zur Ermöglichung der Überwindung eines Hindernisses nach Anspruch 1, **dadurch gekennzeichnet, dass** es einen kippbaren Benutzersitz umfasst, der sich mittels eines Höhensensors in allen Umständen horizontal positioniert.

## Claims

1. A device enabling to cross an obstacle for a motorized vehicle comprised of:
- a chassis (2) connected to three wheels (3a, 3b, 3c) on each lateral side;
- motor means (5) capable of causing the wheels (3a, 3b, 3c) to rotate;
and on each lateral side of the chassis (2) is a mechanism including two arms (7a, 7b) articulated two-by-two around a common pivoting axis (6), on which the three wheels, a front wheel (3a), an intermediate wheel (3b) and a rear wheel (3c), respectively, are distributed, said mechanism permitting each wheel to pivot with respect to the axis of each adjacent wheel, wherein the chassis (2) is connected to each mechanism with articulated arms (7a, 7b) through two shafts (8, 12) mounted so as to freely rotate, at least one of the shafts (12) being capable of compensating for the variation in distance between these two shafts (8, 12) when the arms (7a, 7b) are not aligned.

2. The device enabling to cross an obstacle according to the preceding claim, wherein the motor means (5) are connected to one of the articulated arms (7a, 7b) of the mechanism by a motor shaft (8).

3. The device enabling to cross an obstacle according to the preceding claim, wherein said motor shaft (8) drives the wheels (3a, 3b, 3c) in rotation through transmission means (9a, 9b, 9c) arranged between the motor shaft (8) and the axles of the wheels.

4. The device enabling to cross an obstacle according to the preceding claim, wherein the left lateral wheels are powdered by motor means independent from the motor means powdering the right lateral wheels.

5. The device enabling to cross an obstacle according to the preceding claim, wherein one of said shafts is a crankshaft-like shaft (12).

6. The device enabling to cross an obstacle according to the preceding claim, wherein the crankshaft-like shaft (12) is comprised of a first shaft length (12b) connected to an articulated arm (7b) and a second shaft length (12a) connected to the chassis (2), the two shaft lengths (12a, 12b) being articulated to each other by a connecting rod.

7. The device enabling to cross an obstacle according to claim 1, wherein one of said shafts is a shaft sliding in a horizontal plane.

8. The device enabling to cross an obstacle according to one of the preceding claims, wherein it is provided with a front and/or rear anti-tilting device comprising, on each lateral side of the vehicle, means for locking the pivoting of at least one articulated arm (7a, 7b) during the forward or backward tilting of the chassis (2).

9. The device enabling to cross an obstacle according to the preceding claim, wherein said means for blocking the pivoting of the articulated arms (7a, 7b) during the forward or backward tilting of the frame (2) consist of a pawl (16) for blocking the pivoting of the rear (7b) and front (7a) arms, respectively, which it is connected to by means of a double linkage transforming the variation in distance between the frame (2) and the articulated arms (7a, 7b) into a movement of the pawl (16) so that one of its ends cooperates with a knurled edge (17) of said locking means and blocks said pivoting.

10. The device enabling to cross an obstacle according to the preceding claim, wherein the two linkages each consist of a toggle joint, the distal connecting rods (19, 23) of the pawl (16) of which are driven by the front (7a) or rear 7b) arm, respectively, and the proximal connecting rods (20, 22) of the pawl (16) of which are hinged to the two ends (38, 39) of a connecting rod (21) including a journal (24) about which the pawl (16) pivots, one end of which is articulated to the chassis (2), one of the connecting rods (19, 22) of each toggle joint also being articulated to the chassis (2).

11. The device enabling to cross an obstacle according to one of the preceding claims, wherein it is provided with a device enabling the crossing of the rear of the vehicle, including on each lateral side of the vehicle one anti-tilt wheel (27) placed at the rear of the vehicle, fastened to an end of a rod (28) articulated to the chassis (2) and to a connecting rod (29) connecting it to damping means, said connecting rod (29) being pivotally connected to a toggle joint the distal rod of the damping means of which is articulated, on the one hand, to the chassis (2) in front of the central axis (14b) of the rear arm (7b) and, on the other hand, to said rear arm (7b) at the level of its central axis (14b), this device enabling the crossing causing the repercussion of the pivoting of the articulated arms (7a, 7b) onto the position of the wheel (27), the latter being maintained in a raised position relative to the ground when rolling on a flat ground and applied onto the ground when crossing an obstacle with the rear wheel (3c).

12. The device enabling to cross an obstacle according to the preceding claim, wherein the damping means consist of a connecting rod of varying length, such as a jack or shock absorber with an axial spring (30), pivotally mounted on the chassis (2), capable of being elastically compressed when applying the wheel (27) onto the ground.

13. The device enabling to cross an obstacle according to one of the preceding claims, wherein at least one set of wheels is provided with flexible high blades in the direction of the pivoting axis of the wheels.

14. The device enabling to cross an obstacle according to one of the preceding claims, wherein at least one set of wheels is provided with omnidirectional wheels.

15. The device enabling to cross an obstacle according to one of the preceding claims, wherein additional wheels are added between two adjacent wheels, laterally recessed relative to the already existing wheels.

16. The device enabling to cross an obstacle according to one of the preceding claims, wherein at least one wheel is mounted on a rotating flexible hub and/or on a hub with a freewheel.

17. A motorized vehicle equipped with a device enabling to cross an obstacle according to claim 1, wherein it comprises a user seat pivoting and positioning horizontally under any circumstances by means of a level sensor.
